# EUROPEAN PATENT APPLICATION

(11) **EP 4 398 501 A1**
(43) Date of publication of application: **10.07.2024**
(21) Application number: 22872108.0
(22) Date of filing: 23.09.2022
(51) Int. Cl.: H04L 1/00

(54) **COMMUNICATION METHOD AND APPARATUS**

(30) Priority: 24.09.2021 CN 202111124216
(71) Applicant: Huawei Technologies Co., Ltd., Shenzhen, Guangdong 518129 (CN)
(72) Inventor: HU, Dan, Shenzhen, Guangdong 518129 (CN); ZHANG, Xu, Shenzhen, Guangdong 518129 (CN)
(74) Representative: Goddar, Heinz J.
(86) International application number: PCT/CN2022/120826
(87) International publication number: WO 2023/046064

(57) **Abstract**

A communication method and apparatus are provided, to resolve a problem that uplink transmission performance of a 5G network in the conventional technology is limited. The method includes: An access network device sends first information to a terminal device, where the first information indicates a layer quantity of a PUSCH, and the layer quantity of the PUSCH is not less than 2; the terminal device determines a first MCS table based on the layer quantity of the PUSCH; and then the terminal device sends the PUSCH to the access network device based on the first MCS table. The access network device demodulates the PUSCH based on the first MCS table.

## Description

### CROSS-REFERENCE TO RELATED APPLICATIONS

This application claims priority to Chinese Patent Application No. 202111124216.5, filed with the China National Intellectual Property Administration on September 24, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

5G has a larger transmission capacity, higher reliability, and a lower latency. 5G can not only meet to consumer (To Consumer, To C) increasing requirements on a high-bandwidth mobile internet, but also integrate with a plurality of services in vertical industries to meet to business (To Business, To B) application requirements in industries such as industrial manufacturing, transportation, energy, and healthcare. Therefore, as a next-generation digital infrastructure, 5G is becoming new driving energy for economic and social development.

Currently, mainstream 5G commercial deployment bands are mainly time division duplex (time division duplex, TDD) bands (bands), for example, 3.5 GHz/2.6 GHz. Due to a high penetration loss, a low uplink duty cycle, and the like of these bands, these bands have shortcomings in uplink coverage, capacity, and the like. Therefore, to ensure development of diversified services, improve user experience, and reduce deployment costs, uplink transmission performance of a 5G network urgently needs to be improved.

### SUMMARY

This application provides a communication method and apparatus, to implement transmission of a physical uplink shared channel (physical uplink shared channel, PUSCH) between a terminal device and an access network device by using a plurality of layers, to help improve uplink transmission performance of a 5G network.

According to a first aspect, this application provides a communication method. The method may be performed by a terminal device or a module (for example, a chip) in the terminal device. The method includes: receiving first information, where the first information indicates a layer quantity of a PUSCH, and the layer quantity of the PUSCH is not less than 2; determining a first modulation and coding scheme (modulation and coding scheme, MCS) table based on the layer quantity of the PUSCH; and sending the PUSCH based on the first MCS table.

In the foregoing technical solution, the terminal device may determine the first MCS table based on the layer quantity of the PUSCH, where the layer quantity of the PUSCH is not less than 2. The terminal device may transmit the PUSCH to an access network device by using a plurality of layers based on the first MCS table. This helps increase an uplink resource capacity, in other words, helps improve uplink transmission performance of a 5G network.

In a possible implementation, the first MCS table includes one or more of the following MCSs: an MCS whose modulation order is 6 and whose target coding rate×1024 is 455; and an MCS whose modulation order is 6 and whose target coding rate×1024 is 477.

In the foregoing technical solution, the two MCSs included in the first MCS table may be respectively represented as (6, 455) and (6, 477), and both (6, 455) and (6, 477) may further correspond to a layer quantity 2. A demodulation threshold corresponding to the layer quantity 2 is lower than a demodulation threshold corresponding to a layer quantity 1, so that a demodulation threshold of the PUSCH is improved.

In a possible implementation, a maximum modulation order in the first MCS table is 10, and the first MCS table does not include an MCS whose modulation order is 8 and whose target coding rate×1024 is 948.

In the foregoing technical solution, the first MCS table in which the maximum modulation order is 10 does not include the MCS whose modulation order is 8 and whose target coding rate×1024 is 948. This helps ensure that a demodulation threshold in the first MCS table increases with an increase of an MCS index, so that a demodulation threshold of the PUSCH is improved.

In a possible implementation, the method further includes: receiving a first MCS index and a first parameter; determining a modulation order of the PUSCH based on the first parameter; and determining, as a target coding rate of the PUSCH, a target coding rate corresponding to the first MCS index in the first MCS table.

In the foregoing technical solution, the terminal device may determine the modulation order based on the first parameter indicated by an access network device. This helps improve flexibility of a modulation order used by the terminal device to transmit the PUSCH.

In a possible implementation, the method further includes: receiving a first MCS index and a scale factor, where the scale factor includes a first scale factor and/or a second scale factor; and obtaining a modulation order of the PUSCH based on the first scale factor and a modulation order corresponding to the first MCS index in the first MCS table; and/or obtaining a target coding rate of the PUSCH based on the second scale factor and a target coding rate corresponding to the first MCS index in the first MCS table.

In the foregoing technical solution, the terminal device may determine the modulation order of the PUSCH based on the first scale factor indicated by the access network device, and/or determine the target coding rate of the PUSCH based on the second scale factor indicated by the access network device. This helps improve flexibility of a modulation order and/or a target coding rate used by the terminal device to transmit the PUSCH.

In a possible implementation, the method further includes: receiving second information, where the second information indicates that a waveform of the PUSCH is a discrete Fourier transform-spread orthogonal frequency division multiplexing (discrete Fourier transform-spread orthogonal frequency division multiplexing, DFT-S-OFDM) waveform.

In the foregoing technical solution, when the terminal device transmits the PUSCH by using the DFT-s-OFDM waveform, multi-layer transmission performed by using the DFT-s-OFDM waveform may bring a large coding gain.

According to a second aspect, this application provides a communication method. The method may be performed by an access network device or a module (for example, a chip) in the access network device. The method includes: sending first information, where the first information indicates a layer quantity of a PUSCH, the layer quantity of the PUSCH is not less than 2, and the layer quantity of the PUSCH is associated with a first MCS table; and receiving the PUSCH, and demodulating the PUSCH based on the first MCS table.

In a possible implementation, the first MCS table includes one or more of the following MCSs: an MCS whose modulation order is 6 and whose target coding rate×1024 is 455; and an MCS whose modulation order is 6 and whose target coding rate×1024 is 477.

In a possible implementation, a maximum modulation order in the first MCS table is 10, and the first MCS table does not include an MCS whose modulation order is 8 and whose target coding rate×1024 is 948.

In a possible implementation, the method further includes: sending a first MCS index and a first parameter, where the first parameter indicates a modulation order of the PUSCH, and the first MCS index corresponds to a target coding rate of the PUSCH in the first MCS table.

In a possible implementation, the method further includes: sending a first MCS index and a scale factor, where the scale factor includes a first scale factor and/or a second scale factor; and the first scale factor and a modulation order corresponding to the first MCS index in the first MCS table are used to determine a modulation order of the PUSCH; and/or the second scale factor and a target coding rate corresponding to the first MCS index in the first MCS table are used to determine a target coding rate of the PUSCH.

In a possible implementation, the method further includes: sending second information, where the second information indicates that a waveform of the PUSCH is a DFT-s-OFDM waveform.

According to a third aspect, this application provides a communication method. The method may be performed by a terminal device or a module (for example, a chip) in the terminal device. The method includes: receiving a cell identifier (Cell ID) or an absolute radio frequency channel number (absolute radio frequency channel number, ARFCN); determining a first MCS table based on the cell identifier or the ARFCN; and sending a PUSCH based on the first MCS table.

According to a fourth aspect, this application provides a communication method. The method may be performed by an access network device or a module (for example, a chip) in the access network device. The method includes: sending a cell identifier or an ARFCN; determining a first MCS table based on the cell identifier or the ARFCN; and receiving a PUSCH, and demodulating the PUSCH based on the first MCS table.

According to a fifth aspect, an embodiment of this application provides a communication apparatus. The apparatus has a function of implementing any one of the first aspect or the possible implementations of the first aspect, or has a function of implementing any one of the third aspect or the possible implementations of the third aspect. The apparatus may be a terminal device, or may be a chip included in the terminal device.

Alternatively, the communication apparatus may have a function of implementing any one of the second aspect or the possible implementations of the second aspect, or a corresponding function of performing any one of the fourth aspect or the implementations of the fourth aspect. The apparatus may be an access network device, or may be a chip included in the access network device.

The functions of the foregoing communication apparatus may be implemented by hardware, or may be implemented by hardware executing corresponding software. The hardware or software includes one or more modules, units, or means (means) corresponding to the foregoing functions.

In a possible implementation, a structure of the apparatus includes a processing module and a transceiver module. The processing module is configured to: support the apparatus in performing the corresponding function in any one of the first aspect or the implementations of the first aspect, performing the corresponding function in any one of the second aspect or the implementations of the second aspect, performing the corresponding function in any one of the third aspect or the implementations of the third aspect, or performing the corresponding function in any one of the fourth aspect or the implementations of the fourth aspect.

The transceiver module is configured to support communication between the apparatus and another communication device. For example, when the apparatus is the terminal device, the apparatus may receive first information from the access network device. The communication apparatus may further include a storage module. The storage module is coupled to the processing module, and the storage module stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus performs the method in any one of the first aspect or the possible implementations of the first aspect, performs the method in any one of the second aspect or the possible implementations of the second aspect, performs the method in any one of the third aspect or the possible implementations of the third aspect, or performs the corresponding function in any one of the fourth aspect or the implementations of the fourth aspect. Optionally, the apparatus further includes a communication interface, and the processor is coupled to the communication interface. When the apparatus is the access network device or the terminal device, the communication interface may be a transceiver or an input/output interface; or when the apparatus is the chip included in the access network device or the chip included in the terminal device, the communication interface may be an input/output interface of the chip. Optionally, the transceiver may be a transceiver circuit, and the input/output interface may be an input/output circuit.

According to a sixth aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect or the possible implementations of the first aspect, implement the method in any one of the second aspect or the possible implementations of the second aspect, implement the method in any one of the third aspect or the possible implementations of the third aspect, or perform the corresponding function in any one of the fourth aspect or the implementations of the fourth aspect.

Optionally, the chip system further includes an interface circuit, and the interface circuit is configured to exchange code instructions to the processor.

Optionally, there may be one or more processors in the chip system, and the processor may be implemented by hardware or software. When implemented by the hardware, the processor may be a logic circuit, an integrated circuit, or the like. When implemented by the software, the processor may be a general-purpose processor, and is implemented by reading software code stored in the memory.

Optionally, there may be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a seventh aspect, an embodiment of this application provides a computer-readable storage medium. The computer readable-storage medium stores a computer program or instructions. When the computer program or the instructions are executed, a computer is enabled to perform the method in any one of the first aspect or the possible implementations of the first aspect, perform the method in any one of the second aspect or the possible implementations of the second aspect, perform the method in any one of the third aspect or the possible implementations of the third aspect, or perform the corresponding function in any one of the fourth aspect or the implementations of the fourth aspect.

According to an eighth aspect, an embodiment of this application provides a computer program product. When a computer reads and executes the computer program product, the computer is enabled to perform the method in any one of the first aspect or the possible implementations of the first aspect, perform the method in any one of the second aspect or the possible implementations of the second aspect, perform the method in any one of the third aspect or the possible implementations of the third aspect, or perform the corresponding function in any one of the fourth aspect or the implementations of the fourth aspect.

According to a ninth aspect, an embodiment of this application provides a communication system. The communication system includes a terminal device and an access network device. The terminal device may perform the method in any one of the first aspect or the possible implementations of the first aspect, and the access network device may perform the method in any one of the second aspect or the possible implementations of the second aspect. Alternatively, the terminal device may perform the method in any one of the third aspect or the possible implementations of the third aspect, and the access network device may perform the method in any one of the fourth aspect or the possible implementations of the fourth aspect.

For technical effects that can be achieved in any one of the second aspect to the ninth aspect, refer to descriptions of beneficial effects in the first aspect. Details are not described herein again.

### BRIEF DESCRIPTION OF DRAWINGS

FIG. 1 is a schematic diagram of an architecture of a communication system applicable to this application;
FIG. 2 is a schematic diagram of another architecture of a communication system applicable to this application;
FIG. 3 shows a method of PUSCH transmission between an access network device and a terminal device according to an embodiment of this application;
FIG. 4a is a schematic diagram of comparison between demodulation thresholds corresponding to PUSCH transmission according to an embodiment of this application;
FIG. 4b is a schematic diagram of another comparison between demodulation thresholds corresponding to PUSCH transmission according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of an MCS table determining method according to an embodiment of this application;
FIG. 8 is a schematic diagram of a structure of a communication apparatus according to an embodiment of this application; and
FIG. 9 is a schematic diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The communication method provided in this application may be applied to various communication systems, for example, an Internet of Things (internet of things, IoT) system, a narrow band Internet of Things (narrow band internet of things, NB-IoT) system, a long term evolution (long term evolution, LTE) system, a 5^{th} generation (5G) communication system, an LTE and 5G hybrid architecture, a 5G new radio (new radio, NR) system, and a new communication system emerging in future communication development. The 5G communication system in this application may include at least one of a non-standalone (non-standalone, NSA) 5G communication system or a standalone (standalone, SA) 5G communication system. The communication system may alternatively be a public land mobile network (public land mobile network, PLMN) network, a device-to-device (device-to-device, D2D) network, a machine-to-machine (machine-to-machine, M2M) network, or another network.

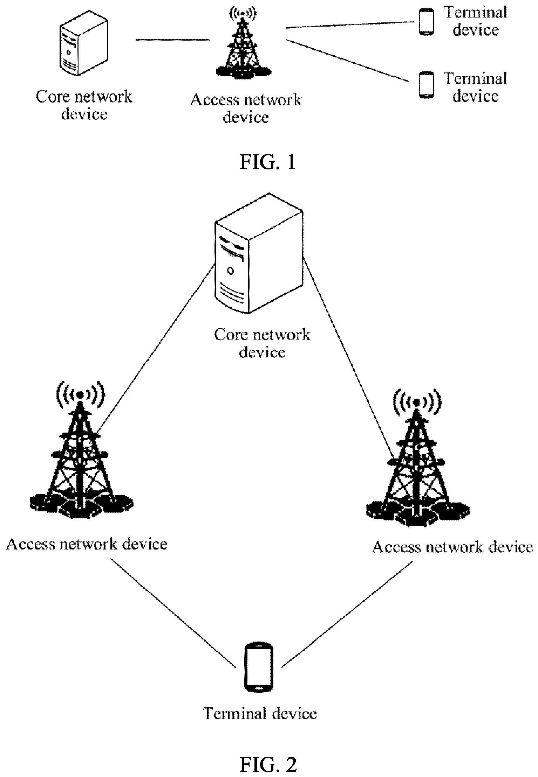

As shown in FIG. 1, a communication system to which an embodiment of this application is applied may include a core network device, an access network device, and at least two terminal devices. The terminal device is connected to the access network device in a wireless manner, and the access network device is connected to the core network in a wireless or wired manner. Alternatively, as shown in FIG. 2, a communication system to which an embodiment of this application is applied may include a core network device, at least two access network devices, and at least one terminal device. The core network device and the access network device may be independent different physical devices, or a function of the core network device and a logical function of the access network device may be integrated into a same physical device, or a part of functions of the core network device and a part of functions of the access network device may be integrated into a physical device. The terminal device may be located in a fixed position, or may be movable.

FIG. 1 and FIG. 2 are merely schematic diagrams. The communication system may further include another network device, for example, may further include a relay device and a backhaul device, which are not shown in FIG. 1 and FIG. 2. A quantity of core network devices, access network devices, and terminal devices that are included in the communication system is not limited in embodiments of this application.

The terminal device in embodiments of this application is a user-side entity configured to receive or transmit a signal. The terminal device may be a device that provides voice and data connectivity for a user, for example, a handheld device or vehicle-mounted device with a wireless connection function. The terminal device may alternatively be another processing device connected to a wireless modem. The terminal device may communicate with one or more core network devices by using a radio access network (radio access network, RAN). The terminal device may also be referred to as a wireless terminal, a subscriber unit (subscriber unit), a subscriber station (subscriber station), a mobile station (mobile station), a remote station (remote station), an access point (access point), a remote terminal (remote terminal), an access terminal (access terminal), a user terminal (user terminal), a user agent (user agent), a user device (user device), user equipment (user equipment), or the like. The terminal device may be a mobile terminal, for example, a mobile phone (or referred to as a "cellular" phone) and a computer that has a mobile terminal. For example, the terminal device may be a portable, pocket-size, handheld, computer built-in, or an in-vehicle mobile apparatus that exchanges voice and data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device such as a smartwatch, a smart band, or a pedometer. However, embodiments of this application are not limited thereto. The terminal device in embodiments of this application may alternatively be a terminal device in a future evolved PLMN, or the like. This is not limited in embodiments of this application. A specific technology and a specific device form used by the terminal device are not limited in embodiments of this application.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between one thing and another. In embodiments of this application, the IoT technology may implement massive connections, deep coverage, and terminal power saving by using, for example, a narrow band (narrow band, NB) technology.

In addition, in embodiments of this application, the terminal device may further include a sensor such as an intelligent printer, a train detector, or a gas station. Main functions of the terminal device include collecting data, receiving control information and downlink data of the access network device, sending an electromagnetic wave, transmitting uplink data to the access network device, and the like.

The access network device in embodiments of this application is a network-side entity configured to transmit or receive a signal. The access network device in embodiments of this application may be a device in a wireless network, for example, a RAN node that connects a terminal to the wireless network. For example, the access network device may be a new radio controller (new radio controller, NR controller), a gNode B (gNB) in a 5G system, a central unit (central unit, CU), a new radio base station, a radio remote module, a micro base station, a relay (relay), a distributed unit (distributed unit, DU), a home base station, a transmission reception point (transmission reception point, TRP), a transmission point (transmission point, TP), or any other wireless access device. However, this is not limited in embodiments of this application. The access network device may cover one or more cells.

The access network device and the terminal device may be deployed on land, including indoor or outdoor, handheld or in-vehicle; may be deployed on water; or may be deployed on aircraft, a drone, a balloon, or a satellite in the air. Application scenarios of the access network device and the terminal device are not limited in embodiments of this application.

A network architecture and a service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

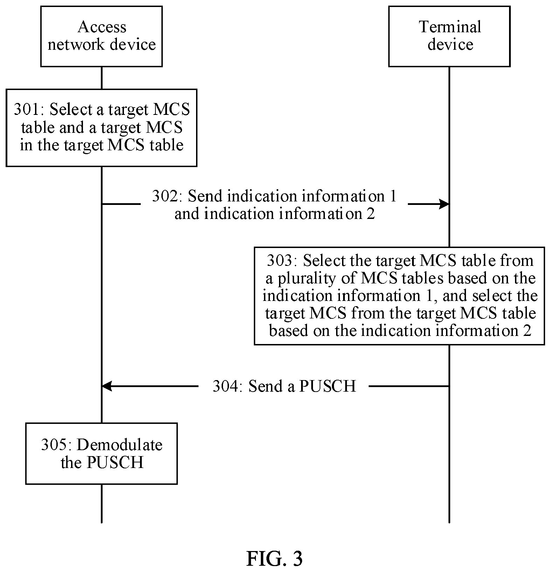

FIG. 3 is a schematic flowchart of an example of a method of PUSCH transmission between an access network device and a terminal device according to this application. The method includes the following steps.

Step 301: The access network device selects a target MCS table and a target MCS in the target MCS table, where the target MCS may be used for PUSCH transmission between the access network device and the terminal device.

In this embodiment of this application, an MCS table may alternatively be an MCS set. The MCS set may be configured by using radio resource control (radio resource control, RRC) signaling. In the following descriptions, MCS tables may all be replaced with MCS sets.

Step 302: The access network device sends indication information 1 and indication information 2 to the terminal device. The indication information 1 may indicate the target MCS table, and the indication information 2 may indicate the target MCS in the target MCS table.

Step 303: The terminal device selects the target MCS table from a plurality of MCS tables based on the indication information 1, and selects the target MCS from the target MCS table based on the indication information 2.

The plurality of MCS tables may be sent by the access network device to the terminal device in advance, may be prestored in the terminal device, or may be defined in a protocol. The MCS tables may correspond to respective transmission waveforms. The transmission waveform is, for example, a cyclic prefix orthogonal frequency division multiplexing (cyclic prefix orthogonal frequency division multiplexing, CP-OFDM) waveform or a discrete Fourier transform-spread orthogonal frequency division multiplexing (discrete Fourier transform-spread orthogonal frequency division multiplexing, DFT-S-OFDM) waveform.

Each MCS table may include a plurality of MCSs (or referred to as an MCS entry or an MCS entry), and each MCS may correspond to a modulation order (modulation order) and a target coding rate (target coding rate). The modulation order and the target coding rate may be used by the terminal device to determine a size of a transport block (transport block size, TBS) carried by a PUSCH.

Table 1 is an example of an MCS table provided in this application. The MCS table may support 64-quadrature amplitude modulation (quadrature amplitude modulation, QAM) modulation in which a transmission waveform is DFT-s-OFDM.

The MCS table may include a plurality of MCSs, and each MCS corresponds to one modulation order and one target coding rate. For example, the MCS may include an MCS index (MCS Index, I_{MCS}), a modulation order (Qₘ), a target coding rate (R)×1024, and spectral efficiency (spectral efficiency), and the spectral efficiency is equal to a product of the modulation order and the target coding rate. In addition, Table 1 may further include a plurality of reserved (reserved) fields.

**Table 1**

| MCS index | Modulation order | Target coding rate×1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

For example, after receiving the indication information 1 and the indication information 2, the terminal device may determine the target MCS table from the plurality of MCS tables based on the indication information 1 (where the target MCS table is, for example, the MCS table shown in Table 1). The terminal device may further determine the target MCS from the MCS table shown in Table 1 based on the indication information 2. For example, if the indication information 2 is an index 18, the terminal device may determine that a modulation order corresponding to the target MCS is 4, and a target coding rate×1024 is 490. For ease of description in this application, an MCS corresponding to the index 18 may be referred to as an MCS 18 or an MCS (4, 490). That is, the target MCS is the MCS 18 or the MCS (4, 490). Similarly, an MCS corresponding to another index, for example, an index 21, may be referred to as an MCS 21 or an MCS (4, 658). Others are similar to this.

Step 304: The terminal device sends the PUSCH to the access network device based on the target MCS.

For example, in the foregoing example, the target MCS table is the MCS table shown in Table 1, and the target MCS is the MCS corresponding to the index 18. In this case, the terminal device may send the PUSCH to the access network device based on the MCS (4, 490).

Step 305: The access network device demodulates the PUSCH.

This application further provides MCS tables shown in Table 2 to Table 5. The terminal device may select the target MCS table and the target MCS in the target MCS table based on different indications from the access network device.

PUSCHs in the following example (1) to example (6) may be described in different cases based on transmission waveforms used for PUSCH transmission. Example (1): PUSCH scheduled by using an uplink grant (uplink grant, UL grant) in a random access response (random access response, RAR). Example (2): PUSCH scheduled by using a fallback RAR UL grant. Example (3): Message A (Msg A) PUSCH transmission. Example (4): PUSCH scheduled by using a downlink control information (downlink control information, DCI) format 0_0 (where cyclic redundancy check (cyclic redundancy check, CRC) of the DCI format 0_0 is scrambled by using a cell radio network temporary identifier (cell radio network temporary identifier, C-RNTI), an MCS-C-RNTI, a TC-RNTI, or a CS-RNTI). Example (5): PUSCH scheduled by using a DCI format 0_1 or a DCI format 0_2, where CRC of DCI fomat is scrambled by using a C-RNTI, an MCS-C-RNTI, an SP-CSI-RNTI, or a CS-RNTI. Example (6): PUSCH scheduled by using configured scheduling (configured grant) of a CS-RNTI.

The transmission waveform used for PUSCH transmission may be the CP-OFDM waveform or the DFT-S-OFDM waveform. Based on the CP-OFDM waveform and the DFT-S-OFDM waveform, the cases are classified into Case 1 and Case 2 in the following.

Case 1: The CP-OFDM waveform is used for PUSCH transmission.

For example, if the access network device sends transform precoding (transform precoding, TP) disable to the terminal device, the terminal device may transmit the PUSCH to the access network device by using the CP-OFDM waveform.
- If a parameter MCS-TableDCI-0-2 in a PUSCH configuration (PUSCH-Config) in the RRC signaling is configured as 'QAM256', and the PUSCH is scheduled by a physical downlink control channel (physical downlink control channel, PDCCH) of the DCI format 0_2, where CRC of the DCI format is scrambled by using the C-RNTI or the SP-CSI-RNTI, the terminal device determines a modulation order Qₘ and a target coding rate R of the PUSCH based on an index in Table 3.
- Otherwise, if no MCS-C-RNTI is configured for the terminal device, a parameter MCS-TableDCI-0-2 in PUSCH-Config is configured as 'QAM64LowSE', and the PUSCH is scheduled by a PDCCH of the DCI format 0_2, where CRC of the DCI format is scrambled by using the C-RNTI or the SP-CSI-RNTI, the terminal device determines a modulation order Qₘ and a target coding rate R of the PUSCH based on an index in Table 4.
- Otherwise, if a parameter MCS-Table in PUSCH-Config is configured as 'QAM256', and the PUSCH is scheduled by a PDCCH of the DCI format 0_1, where CRC of the DCI format is scrambled by using the C-RNTI or the SP-CSI-RNTI, the terminal device determines a modulation order Qₘ and a target coding rate R of the PUSCH based on an index in Table 3.
- Otherwise, if no MCS-C-RNTI is configured for the terminal device, a parameter MCS-Table in PUSCH-Config is configured as 'QAM64LowSE', and the PUSCH is scheduled by a PDCCH of a DCI format other than the DCI format 0_2 in terminal device-specific search space, where CRC of the DCI format is scrambled by using the C-RNTI or the SP-CSI-RNTI, the terminal device determines a modulation order Qₘ and a target coding rate R of the PUSCH based on an index in Table 4.
- Otherwise, if the MCS-C-RNTI is configured for the terminal device, and the PUSCH is scheduled by a PDCCH whose CRC is scrambled by using the MCS-C-RNTI, the terminal device determines a modulation order Qₘ and a target coding rate R of the PUSCH based on an index in Table 4.
- Otherwise, if MCS-Table in a configured grant (configuredGrantConfig) field in the RRC signaling is configured as 'QAM256', and the PUSCH is scheduled by a PDCCH whose CRC is scrambled by using the CS-RNTI, or the PUSCH is transmitted through configured scheduling, the terminal device determines a modulation order Qₘ and a target coding rate R of the PUSCH based on an index in Table 3.
- Otherwise, if MCS-Table in configuredGrantConfig in the RRC signaling is configured as 'QAM64LowSE', and the PUSCH is scheduled by a PDCCH whose CRC is scrambled by using the CS-RNTI, or the PUSCH is transmitted through configured scheduling, the terminal device determines a modulation order Qₘ and a target coding rate R of the PUSCH based on an index in Table 4.
- Otherwise, if one MsgA PUSCH is transmitted, the terminal device determines a modulation order Qₘ and a target coding rate R of the PUSCH based on Table 2 and an MCS index indicated by a higher layer parameter msgA-MCS.
- Otherwise, the terminal device determines a modulation order Qₘ and a target coding rate R of PUSCH transmission based on an MCS index in Table 2.

Case 2: The DFT-s-OFDM waveform is used for PUSCH transmission.

For example, if the access network device sends transform precoding enable to the terminal device, the terminal device may transmit the PUSCH to the access network device by using the DFT-s-OFDM waveform.
- If a parameter MCS table transform precoder DCI-0-2 (MCS-TableTransformPrecoderDCI-0-2) in PUSCH-Config in the RRC signaling is configured as 'QAM256', and the PUSCH is scheduled by a PDCCH of the DCI format 0_2, where CRC of the DCI format is scrambled by using the C-RNTI or the SP-CSI-RNTI, the terminal device determines a modulation order Qₘ and a target coding rate R of the PUSCH based on an index in Table 3.
- Otherwise, if no MCS-C-RNTI is configured for the terminal device, a parameter MCS-TableTransformPrecoderDCI-0-2 in PUSCH-Config is configured as 'QAM64LowSE', and the PUSCH is scheduled by a PDCCH of the DCI format 0_2, where CRC of the DCI format is scrambled by using the C-RNTI or the SP-CSI-RNTI, the terminal device determines a modulation order Qₘ and a target coding rate R of the PUSCH based on the index in Table 1.
- Otherwise, if a parameter MCS-TableTransformPrecoder in PUSCH-Config is configured as 'QAM256', and the PUSCH is scheduled by a PDCCH of the DCI format 0_1, where CRC of the DCI format is scrambled by using the C-RNTI or the SP-CSI-RNTI, the terminal device determines a modulation order Qₘ and a target coding rate R of the PUSCH based on an index in Table 3.
- Otherwise, if no MCS-C-RNTI is configured for the terminal device, a parameter MCS-TableTransformPrecoder in PUSCH-Config is configured as 'QAM64LowSE', and the PUSCH is scheduled by a PDCCH of a DCI format other than the DCI format 0_2 in terminal device-specific search space, where CRC of the DCI format is scrambled by using the C-RNTI or the SP-CSI-RNTI, the terminal device determines a modulation order Qₘ and a target coding rate R of the PUSCH based on the index in Table 1.
- Otherwise, if the MCS-C-RNTI is configured for the terminal device, and the PUSCH is scheduled by a PDCCH whose CRC is scrambled by using the MCS-C-RNTI, the terminal device determines a modulation order Qₘ and a target coding rate R of the PUSCH based on the index in Table 1.
- Otherwise, if MCS-TableTransformPrecoder in a configuredGrantConfig field in the RRC signaling is configured as 'QAM256', and the PUSCH is scheduled by a PDCCH whose CRC is scrambled by using the CS-RNTI, or the PUSCH is transmitted through configured scheduling, the terminal device determines a modulation order Qₘ and a target coding rate R of the PUSCH based on an index in Table 3.
- Otherwise, if MCS-TableTransformPrecoder in a configuredGrantConfig field in the RRC signaling is configured as 'QAM64LowSE', and the PUSCH is scheduled by a PDCCH whose CRC is scrambled by using the CS-RNTI, or the PUSCH is transmitted through configured scheduling, the terminal device determines a modulation order Qₘ and a target coding rate R of the PUSCH based on the index in Table 1.
- Otherwise, if one MsgA PUSCH is transmitted, the terminal device determines a target coding rate of the PUSCH based on an MCS index indicated by a higher layer parameter msgA-MCS and Table 5, where q=2.
- Otherwise, the terminal device determines a modulation order Qₘ and a target coding rate R of PUSCH transmission based on an MCS index in Table 5.

For Table 5 and Table 1, if a higher layer parameter tp-pi2BPSK is configured, q=1. Otherwise, q=2.

**Table 2**

| MCS index | Modulation order | Target coding rate×1024 | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

**Table 3**

| MCS index | Modulation order | Target coding rate×1024 | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved | |
| 29 | 4 | Reserved | |
| 30 | 6 | Reserved | |
| 31 | 8 | Reserved | |

**Table 4**

| MCS index | Modulation order | Target coding rate×1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

**Table 5**

| MCS index | Modulation order | Target coding rate×1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

Table 1 and Table 4 are used as examples. Table 1 is a QAM64LowSE MCS table applicable to the DFT-s-OFDM waveform, and Table 4 is a QAM64LowSE MCS table applicable to the CP-OFDM waveform. MCSs (to be specific, combinations of target coding rates and modulation schemes) at a junction of a 16-QAM modulation scheme and a 64-QAM modulation scheme are different in the two tables.

Specifically, in Table 1, combinations of (modulation order, target coding rate×1024) respectively corresponding to the index 21, the index 22, and the index 23 are (4, 658), (4, 699), and (4, 772), where (4, 658), (4, 699), and (4, 772) are not listed in Table 4. In addition, in Table 4, combinations of (modulation order, target coding rate×1024) respectively corresponding to the index 21, the index 22, and the index 23 are (6, 438), (6, 466), and (6, 517), where (6, 438), (6, 466), and (6, 517) are not listed in Table 1. In addition, in a case of a same MCS index, the modulation order in Table 1 is less than the modulation order in Table 4, and the target coding rate in Table 1 is greater than the target coding rate in Table 4. Optionally, index numbers such as 21, 22, and 23 in this example are merely examples, and these MCS combinations may have numbers different from 21, 22, or 23 in different MCS tables.

It may be considered that the DFT-s-OFDM waveform is more suitable for an MCS combination of a high target coding rate and a low modulation order, and the CP-OFDM waveform is more suitable for an MCS combination of a low target coding rate and a high modulation order.

Currently, the DFT-s-OFDM waveform is applicable only to single-layer transmission, to be specific, a transport layer quantity (which may also be referred to as rank (rank) quantity) corresponding to the DFT-s-OFDM waveform may be equal to 1. The CP-OFDM waveform is applicable to single-layer or multi-layer transmission, and a layer quantity corresponding to the CP-OFDM waveform may be greater than or equal to 1. For example, the layer quantity corresponding to the CP-OFDM waveform may be equal to 2, 3, 4, or 8.

5G commercial deployment bands are mainly TDD bands, for example, a band of 3.5 GHz/2.6 GHz. Due to a high penetration loss, a low uplink duty cycle, and another reason of these bands, uplink coverage, a capacity, and the like of these bands are all insufficient. To improve uplink transmission performance of a 5G network, this application provides a communication method applicable to multi-layer transmission. The communication method is applicable to the communication system in FIG. 1 or FIG. 2.

It is noted in advance that this application provides a new MCS table (which may be referred to as a first MCS table) used for PUSCH transmission. The first MCS table may support multi-layer transmission. It may be understood that the first MCS table includes an MCS corresponding to a plurality of layers. In a possible manner, a layer quantity corresponding to the MCS in the first MCS table may include but is not limited to one or more of 1, 2, 3, 4, and 8. For example, when the layer quantity is 1 (that is, single-layer transmission), a terminal device may be indicated to transmit one information flow to an access network device on one resource. When the layer quantity is greater than 1 (that is, multi-layer transmission), a terminal device may be indicated to transmit a plurality of information flows to an access network device on one resource. For example, the first MCS table may include two MCSs: an MCS whose modulation order is 6 and whose target coding rate×1024 is 455, and an MCS whose modulation order is 6 and whose target coding rate×1024 is 477. The two MCSs may further correspond to a layer quantity 2.

Further, the first MCS table may support 1024-QAM modulation. In a possible manner, a modulation order corresponding to the MCS in the first MCS table may include one or more of 2, 4, 6, 8, and 10. Different modulation orders correspond to different modulation schemes. For example, the first MCS table includes a first modulation order, the first modulation order is equal to 10, and the first modulation order may correspond to 1024-QAM modulation.

When the terminal device sends a PUSCH to the access network device based on an MCS, the access network device may demodulate the received PUSCH based on the same MCS. The PUSCH may correspond to a demodulation threshold, and the demodulation threshold may be understood as a ratio of energy per bit to noise power spectral density. On the premise of a block error ratio (block error ratio, BLER), the PUSCH received by the access network device cannot be lower than the demodulation threshold. In the first MCS table, as an MCS index increases, spectral efficiency gradually increases, and a demodulation threshold for demodulating the PUSCH by the access network device also increases.

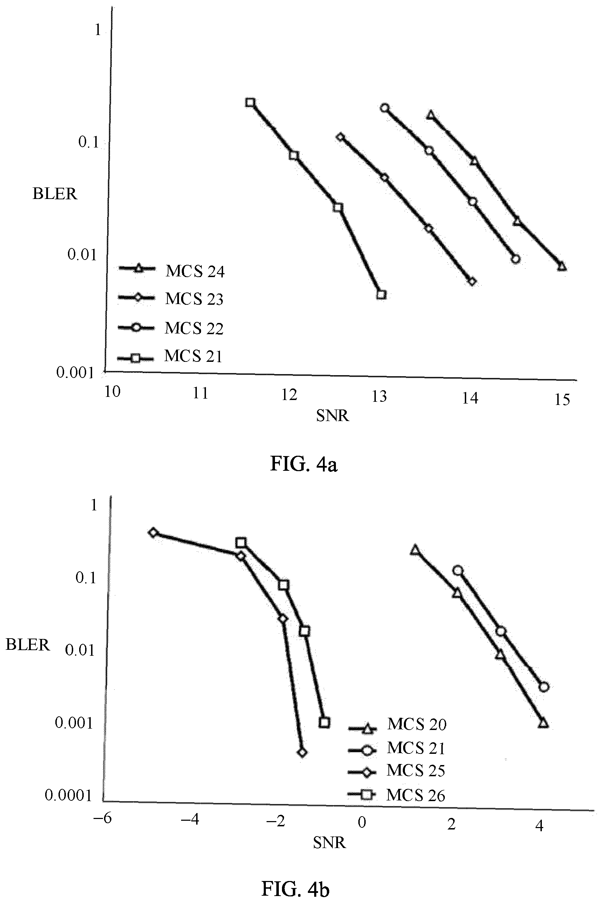

Table 6 is a table of 1024-QAM modulation for transmission of a physical downlink shared channel (physical downlink shared channel, PDSCH) according to this application. Based on Table 6, this application may further provide a first MCS table used for multi-layer transmission. Table 6 is first explained and described in the following. When Table 6 is applied to multi-layer transmission performed by using a DFT-s-OFDM waveform, for demodulation thresholds respectively corresponding to an MCS 21, an MCS 22, an MCS 23, and an MCS 24, refer to FIG. 4a. In FIG. 4a, a vertical coordinate is a block error ratio (block error ratio, BLER), and a horizontal coordinate is a signal-to-noise ratio (signal-to-noise ratio, SNR). A larger signal-to-noise ratio indicates a higher demodulation threshold. The demodulation thresholds sequentially correspond to the MCS 21, the MCS 23, the MCS 22, and the MCS 24 in ascending order. That is, the demodulation threshold corresponding to the MCS 22 is higher than the demodulation threshold corresponding to the MCS 23.

**Table 6**

| MCS index | Modulation order | Target coding rate×1024 | Spectral efficiency |
|---|---|---|---|
| 0 | 2 | 120 | 0.2344 |
| 1 | 2 | 193 | 0.3770 |
| 2 | 2 | 449 | 0.8770 |
| 3 | 4 | 378 | 1.4766 |
| 4 | 4 | 490 | 1.9141 |
| 5 | 4 | 616 | 2.4063 |
| 6 | 6 | 466 | 2.7305 |
| 7 | 6 | 517 | 3.0293 |
| 8 | 6 | 567 | 3.3223 |
| 9 | 6 | 616 | 3.6094 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3301 |
| 25 | 10 | 900.5 | 8.7939 |
| 26 | 10 | 948 | 9.2578 |
| 27 | 2 | Reserved | |
| 28 | 4 | Reserved | |
| 29 | 6 | Reserved | |
| 30 | 8 | Reserved | |
| 31 | 10 | Reserved | |

In an example, to ensure that the demodulation threshold in the first MCS table increases with the increase of the MCS index, the MCS 22 may be deleted based on Table 6, that is, an MCS (8, 948) is deleted. Correspondingly, the first MCS table does not include an MCS whose modulation order is 8 and whose target coding rate×1024 is 948. In this manner, a coding gain may be obtained based on a low coding rate, to help avoid interference between a plurality of transport layers, and improve transmission performance of the terminal device when the terminal device transmits the PUSCH.

For example, Table 7 is an example of some MCSs included in a first type of first MCS table according to this application. In comparison with Table 6, the first MCS table does not include the MCS (8, 948).

**Table 7**

| MCS index | Modulation order | Target coding rate×1024 | Spectral efficiency |
|---|---|---|---|
| 21 | 8 | 916.5 | 7.1602 |
| 23 | 10 | 805.5 | 7.8662 |
| 24 | 10 | 853 | 8.3301 |

In another example, to ensure that the MCS in the first MCS table is applicable to a plurality of layers, two MCSs used for multi-layer transmission may be newly added based on Table 6. For example, Table 8 is an example of some MCSs included in a second type of first MCS table according to this application. In comparison with Table 6, two MCSs are newly added to the first MCS table. For example, the two MCSs are represented as an MCS 25 and an MCS 26. In the first MCS table, the MCS 25 corresponds a modulation order being equal to 6 and a target coding rate×1024 being equal to 455, and may be represented as an MCS (6, 455). In the first MCS table, the MCS 26 corresponds to a modulation order being equal to 6 and a target coding rate×1024 being equal to 477, and may be represented as an MCS (6, 477). In addition, both the MCS 25 and the MCS 26 may be used for transmission of which a layer quantity is equal to 2.

**Table 8**

| MCS index | Modulation order | Target coding rate×1024 | Spectral efficiency |
|---|---|---|---|
| 20 | 8 | 682.5 | 5.3320 |
| 21 | 8 | 711 | 5.5547 |
| 25 | 6 | 455 | 5.3320 |
| 26 | 6 | 477 | 5.5547 |

When Table 8 is applied to multi-layer transmission performed by using the DFT-s-OFDM waveform, for demodulation thresholds respectively corresponding to the MCS 20, the MCS 21, the MCS 25, and the MCS 26, refer to FIG. 4b. As shown in FIG. 4b, a vertical coordinate is a block error ratio, and a horizontal coordinate is a signal-to-noise ratio. A larger signal-to-noise ratio indicates a higher demodulation threshold. The demodulation thresholds sequentially correspond to the MCS 25, the MCS 26, the MCS 20, and the MCS 21 in ascending order. To be specific, in a case of a same modulation order 8 and a same layer quantity 1, a demodulation threshold corresponding to the target coding rate 682.5 is lower than a demodulation threshold corresponding to the target coding rate 711; and in a case of a same modulation order 6 and a same layer quantity 2, a demodulation threshold corresponding to the target coding rate 455 is lower than a demodulation threshold corresponding to the target coding rate 477. In this way, a demodulation threshold corresponding to the low coding rate is lower, and when a frequency selection difference exists in two-layer transmission, the coding gain may be obtained based on the low coding rate, to help improve a demodulation threshold of the PUSCH. Further, as shown in FIG. 4b, the demodulation threshold corresponding to the layer quantity 2 is lower than the demodulation threshold corresponding to the layer quantity 1, and the demodulation threshold of the PUSCH may further be improved by increasing a transport layer quantity.

It should be noted that both the MCSs included in the first MCS tables shown in Table 7 and Table 8 are examples, and the MCS included in the first MCS table may alternatively be in another form. This is not limited in this application.

It should be further noted that in the foregoing example, the MCS (8, 948) corresponds to the index 22. In other words, the MCS corresponding to the index 22 is deleted based on Table 6, to obtain the MCS table in Table 7. However, an index corresponding to the MCS (8, 948) is not limited in this application. It may also be understood that in another MCS table, the MCS (8, 948) may correspond to another different index. Similarly, in the foregoing example, the MCS (6, 455) corresponds to the index 25, and the MCS (6, 477) corresponds to the index 26. This is merely an example for description. In another MCS table, the MCS (6, 455) or the MCS (6, 477) may alternatively correspond to another different index. It is clear that the descriptions are also applicable to another example related to indexes in this application.

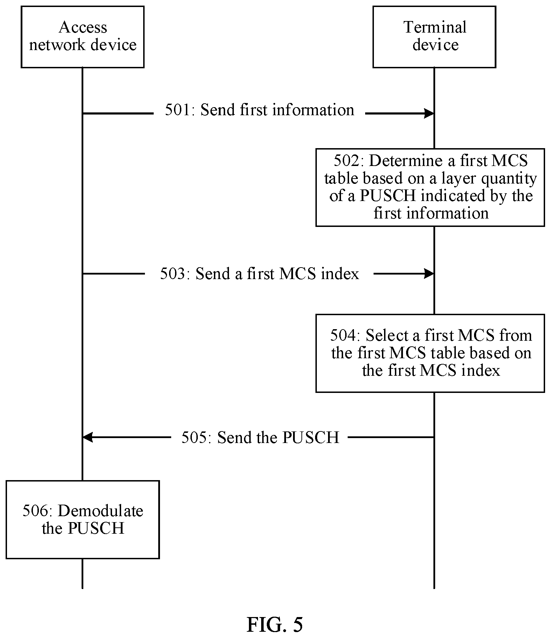

The access network device may indicate the first MCS table and a target MCS (which may be referred to as a first MCS) in the first MCS table to the terminal device, so that the terminal device can transmit the PUSCH to the access network device based on the first MCS table and the first MCS. FIG. 5 is a schematic flowchart of an example of a communication method according to this application. A procedure includes the following steps.

Step 501: An access network device selects a first MCS table, and sends first information to a terminal device based on the first MCS table. The first information indicates a layer quantity of a PUSCH, and the layer quantity of the PUSCH is not less than 2 (in other words, greater than or equal to 2). For example, the layer quantity of the PUSCH indicated by the first information includes but is not limited to 2, 3, 4, and 8. The layer quantity of the PUSCH indicated by the first information may be used by the terminal device to select the first MCS table from a plurality of MCS tables.

The first information may be carried in RRC signaling or DCI. For example, the first information occupies a precoding and layer quantity (precodingAndNumberOfLayers) field in a ConfiguredGrantConfig parameter in the RRC signaling, or occupies a precoding and layer quantity (Precoding information and number of layers) field in uplink scheduling signaling.

Step 502: The terminal device determines the first MCS table based on the layer quantity of the PUSCH indicated by the first information.

In this application, the terminal device may include a plurality of MCS tables in advance. The plurality of MCS tables may be configured by the access network device, defined in a protocol, or prestored. For example, the plurality of MCS tables may include one or more MCS tables in Table 1 to Table 5 and the first MCS table. After receiving the first information, the terminal device may determine, based on the first information, that the layer quantity of the PUSCH is not less than 2. The terminal device may select, from the plurality of MCS tables based on the layer quantity of the PUSCH, an MCS table (namely, the first MCS table) applicable to a plurality of layers.

Step 503: The access network device selects a first MCS from the first MCS table, and sends a first MCS index to the terminal device. In this application, an MCS index may also be referred to as an MCS level (MCS level).

The access network device may select the first MCS from the first MCS table, and an index corresponding to the first MCS in the first MCS table is used as the first MCS index. With reference to the example in Table 8, the first MCS selected by the access network device corresponds to the MCS whose modulation order is 6 and whose target coding rate×1024 is 455. That is, the selected first MCS is the MCS (6, 455). The access network device may send the index 25 (namely, the first MCS index) to the terminal device.

For example, the first MCS index may be a modulation and coding scheme (Modulation and coding scheme) field in the uplink scheduling signaling, or may be an MCS and transport block size (mcsAndTBS) parameter in a ConfiguredGrantConfig field in the RRC signaling.

Step 504: The terminal device selects the first MCS from the first MCS table based on the first MCS index. For example, if the first MCS index is the index 25, the terminal device may select the first MCS, namely, the MCS (6, 455), from the first MCS table based on the index 25.

Step 505: The terminal device sends the PUSCH to the access network device based on the first MCS.

The terminal device may determine, as a target coding rate and a modulation order of the PUSCH, a target coding rate and a modulation order that are included in the first MCS, and send the PUSCH to the access network device based on the target coding rate and the modulation order of the PUSCH.

In addition, the access network device may further indicate the target coding rate and the modulation order of the PUSCH to the terminal device more flexibly.

In a possible implementation, the access network device may not only send the first MCS index to the terminal device, but also send a first parameter to the terminal device. The first parameter may indicate the modulation order of the PUSCH. Correspondingly, the terminal device may send the PUSCH to the access network device based on the first parameter and the first MCS.

During specific implementation, the first parameter may be the modulation order of the PUSCH. For example, the first parameter is a modulation order 8, or the first parameter is a modulation order 10. The terminal device obtains the modulation order of the PUSCH based on the first parameter. In addition, the terminal device may further use, as the target coding rate of the PUSCH based on the first MCS index, the target coding rate in the first MCS corresponding to the first MCS index in the first MCS table. Then, the terminal device sends the PUSCH to the access network device based on the target coding rate and the modulation order of the PUSCH.

The access network device may send the first parameter to the terminal device by using the RRC signaling, a media access control-control element (media access control-control element, MAC CE), or the DCI. The first parameter and the first MCS index may be carried in a same message or different messages.

In another possible implementation, the access network device may not only send the first MCS index to the terminal device, but also send a scale factor to the terminal device. The scale factor may include a first scale factor and/or a second scale factor. The first scale factor may be used by the terminal device to determine the modulation order of the PUSCH, and the second scale factor may be used by the terminal device to determine the target coding rate of the PUSCH. Correspondingly, the terminal device may send the PUSCH to the access network device based on the first scale factor and/or the second scale factor, and the first MCS.

During specific implementation, the terminal device may determine the first MCS from the first MCS table based on the first MCS index. The first MCS includes the modulation order and the target coding rate.

When the scale factor includes the first scale factor, the terminal device may determine the modulation order of the PUSCH based on the modulation order included in the first MCS and the first scale factor. For example, if the modulation order included in the first MCS is 10, and the first scale factor is 0.8, the terminal device may determine that the modulation order of the PUSCH is 8. Herein, the terminal device may use, as the target coding rate of the PUSCH, the target coding rate included in the first MCS.

When the scale factor includes the second scale factor, the terminal device may determine the target coding rate of the PUSCH based on the target coding rate included in the first MCS and the second scale factor. For example, if the target coding rate×1024 included in the first MCS is 455, and the second scale factor is 0.954, the terminal device may determine that the target coding rate×1024 of the PUSCH is 477. Herein, the terminal device may use, as the modulation order of the PUSCH, the modulation order included in the first MCS.

When the scale factor includes both the first scale factor and the second scale factor, the terminal device may determine the modulation order of the PUSCH based on the modulation order included in the first MCS and the first scale factor, and determine the target coding rate of the PUSCH based on the target coding rate included in the first MCS and the second scale factor.

The access network device may send the scale factor to the terminal device by using the RRC signaling, the MAC CE, or the DCI. The scale factor and the first MCS index may be carried in a same message or different messages. It is clear that when the scale factor includes the first scale factor and the second scale factor, the first scale factor and the second scale factor may also be carried in a same message or different messages.

After determining the modulation order and the target coding rate of the PUSCH, the terminal device may perform channel coding on a bit sequence of original information based on the target coding rate in the first MCS, to obtain a bit sequence obtained after the channel coding. Then, the terminal device modulates, based on the modulation order in the first MCS, the bit sequence obtained after the channel coding, to obtain a to-be-sent symbol. Then, the terminal device performs layer mapping on the to-be-sent symbol based on the layer quantity, and the terminal device sends the PUSCH to the access network device.

It should be added that the access network device may further send second information to the terminal device, where the second information may indicate that a waveform of the PUSCH is a DFT-s-OFDM waveform. After receiving the second information, the terminal device may transmit the PUSCH to the access network device by using the DFT-s-OFDM waveform. When the terminal device transmits the PUSCH by using the DFT-s-OFDM waveform, multi-layer transmission performed by using the DFT-s-OFDM waveform may increase an uplink throughput and an uplink capacity.

For example, the second information may be specifically TP enable. For example, the second information may be message 3 transform precoder (msg3-transformPrecoder), and msgA-TransformPrecoder is indicated as enabled (enabled); the second information may be message A transform precoder (msgA-TransformPrecoder), and msgA-TransformPrecoder is indicated as enabled; or the second information is a transformPrecoder parameter in PUSCH-Config or configuredGrantConfig in the RRC signaling, and the transformPrecoder parameter is indicated as enabled.

In addition, the access network device may further send third information to the terminal device. The third information may indicate the terminal device to select, as a target MCS table, an MCS table including a modulation order 10. In this implementation, the terminal device may include a plurality of newly defined MCS tables used for multi-layer transmission, and maximum modulation orders included in the plurality of newly defined MCS tables may be different. For example, if a maximum modulation order included in one of the MCS tables is 10, and a maximum modulation order included in another MCS table is 8, the terminal device may select, from the MCS tables based on the third information, the MCS table including the maximum modulation order 10. For example, the third information may be an MCS-TableTransformPrecoder parameter in the RRC signaling. For example, the MCS-TableTransformPrecoder parameter is configured as QAM1024.

Step 506: The access network device demodulates the PUSCH.

The access network device may demodulate the PUSCH based on the target coding rate and the modulation order of the PUSCH. In a specific implementation, the access network device receives the PUSCH from the terminal device, and may demodulate each layer of signals of a plurality of layers of signals on the PUSCH based on the modulation order of the PUSCH, to obtain a demodulated bit sequence. Then, the access network device performs channel decoding on the demodulated bit sequence based on the target coding rate of the PUSCH, to obtain the bit sequence of the original information.

For example, the terminal device receives the first information from the access network device, where the first information indicates that the layer quantity of the PUSCH is 2. The terminal device may select the MCS table (namely, the first MCS table) shown in Table 8 from a plurality of MCS tables based on the layer quantity 2 of the PUSCH. The terminal device may further receive the first MCS index from the access network device, where the first MCS index may be the index 25. The terminal device may select the first MCS (6, 455) from the first MCS table based on the index 25. The terminal device may further receive the second information from the access network device, where the second information indicates that the waveform used for PUSCH transmission is the DFT-s-OFDM waveform. The terminal device may separately perform channel coding and modulation on the bit sequence of the original information based on the first MCS (6, 455), and send the PUSCH to the access network device by using the DFT-s-OFDM waveform. Correspondingly, for each layer of signals of two layers of signals on the PUSCH, the access network device performs channel decoding and demodulation on the received PUSCH based on the first MCS (6, 455), to obtain the bit sequence of the original information.

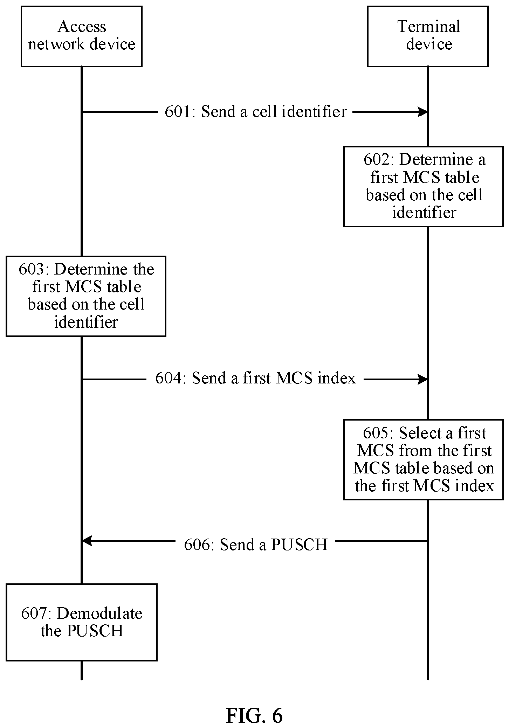

In addition, FIG. 6 is a schematic flowchart of an example of another communication method according to this application. In the method, a terminal device or an access network device may determine a first MCS table based on fourth information. The fourth information may be a cell identifier or an ARFCN. An example in which the fourth information is the cell identifier may be used for description in the following.

Step 601: The access network device sends the cell identifier to the terminal device. The cell identifier may be implicitly associated with the first MCS table. In other words, the cell identifier may implicitly indicate the first MCS table.

Step 602: The terminal device determines the first MCS table based on the cell identifier.

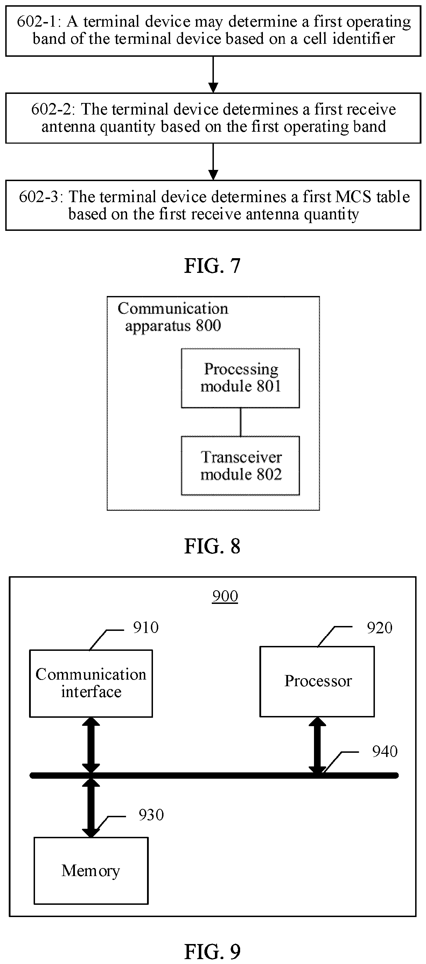

With reference to an example of an MCS table determining manner shown in FIG. 7, the following is explained and described.

Step 602-1: The terminal device may determine a first operating band of the terminal device based on the cell identifier.

The terminal device includes a first preset correspondence, and the first preset correspondence includes a correspondence between a plurality of cell identifiers and an operating frequency. After receiving the cell identifier from the access network device, the terminal device may determine a corresponding operating frequency from the first preset correspondence based on the received cell identifier. The operating frequency may correspond to an operating band (which may be referred to as the first operating band) in which the terminal device operates. For example, the first operating band is a TDD band or a frequency division duplex (frequency division duplex, FDD) band.

Steps 602-2: The terminal device determines a first receive antenna quantity based on the first operating band.

The terminal device includes a second preset correspondence, and the second preset correspondence includes a correspondence between a plurality of operating bands and a receive antenna quantity. The terminal device may determine, from the second preset correspondence based on the first operating band, a receive antenna quantity (which may be referred to as the first receive antenna quantity) corresponding to the first operating band. The first receive antenna quantity may be understood as a quantity of receive antennas used by the access network device to receive a PUSCH when the terminal device sends the PUSCH to the access network device, and the first receive antenna quantity is, for example, 64.

Step 602-3: The terminal device determines the first MCS table based on the first receive antenna quantity.

The terminal device may include a third preset correspondence between the receive antenna quantity and an MCS table. In the third preset correspondence, the first receive antenna quantity corresponds to the first MCS table. For the first MCS table, refer to the descriptions in the foregoing embodiments. In a possible specific manner, in the third preset correspondence, if the receive antenna quantity is greater than an antenna quantity threshold, the receive antenna quantity corresponds to the first MCS table; or if the receive antenna quantity is not greater than (less than or equal to) an antenna quantity threshold, the receive antenna quantity corresponds to a second MCS table. The second MCS table is, for example, Table 1, Table 2, Table 3, Table 4, or Table 5 in the foregoing embodiments.

One or more of the foregoing three preset correspondences may be sent by the access network device to the terminal device in advance. The three preset correspondences may be carried in one message, or may be carried in different messages. Alternatively, one or more of the three preset correspondences are preconfigured in the terminal device.

It should be noted that step 602-1 to step 602-3 are merely examples shown in this application. The terminal device may further include another preset correspondence, and the another preset correspondence may be used by the terminal device to determine the first MCS table based on the cell identifier. A form of the preset correspondence is not limited in this application.

Step 603: The access network device determines the first MCS table based on the cell identifier.

For example, the access network device may alternatively determine the first MCS table based on a manner in which the terminal device determines the first MCS table in step 602. Details are not described again. A sequence of step 602 and step 603 is not limited.

Step 604: The access network device selects a first MCS from the first MCS table, and sends a first MCS index to the terminal device. In addition, the access network device may further send a first parameter or a scale factor to the terminal device.

Step 605: The terminal device selects the first MCS from the first MCS table based on the first MCS index.

Step 606: The terminal device sends the PUSCH to the access network device based on the first MCS. Further, the terminal device may send the PUSCH to the access network device based on the first MCS and the first parameter. Alternatively, the terminal device may send the PUSCH to the access network device based on the first MCS and the scale factor (a first scale factor and/or a second scale factor).

Step 607: The access network device demodulates the PUSCH.

For implementations that are not described in detail in step 601 to step 607, refer to the descriptions in the related embodiment in FIG. 5. In addition, the fourth information may alternatively be the ARFCN, and the cell identifier in step 601 to step 607 may be replaced with the ARFCN, so that the terminal device or the access network device can determine the first MCS table based on the ARFCN.

It should be added that the access network device may further directly send indication information of the first MCS table to the terminal device, where the indication information of the first MCS table is, for example, an identifier of the first MCS table. The terminal device determines, based on the indication information of the first MCS table, to transmit the PUSCH to the access network device based on the first MCS table. For example, the indication information of the first MCS table may be carried in DCI.

In the foregoing technical solution, a new MCS table (namely, the first MCS table) is provided. The MCS table may support PUSCH transmission performed between the terminal device and the access network device by using a plurality of layers, to help increase an uplink resource capacity. The first MCS table includes an MCS corresponding to a low coding rate and a plurality of layers. When PUSCH transmission is performed between the terminal device and the access network device by using a plurality of transport layers, a demodulation threshold of the PUSCH may be improved based on the low coding rate. The first MCS table provided in this application is applicable to a DFT-s-OFDM waveform. When the terminal device transmits the PUSCH by using the DFT-s-OFDM waveform, multi-layer transmission performed by using the DFT-s-OFDM waveform may bring a large coding gain.

Embodiments described in this specification may be independent solutions, or may be combined based on internal logic. All these solutions fall within the protection scope of this application.

It may be understood that in the foregoing method embodiments, the methods and the operations that are implemented by the terminal device may alternatively be implemented by a component (for example, a chip or a circuit) that may be used in the terminal device, and the methods and the operations that are implemented by the access network device may alternatively be implemented by a component (for example, a chip or a circuit) that may be used in the access network device.

In the foregoing embodiments provided in this application, the methods provided in embodiments of this application are separately described from a perspective of interaction between devices. To implement functions in the methods provided in embodiments of this application, the terminal device and the access network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on the foregoing content and a same concept, FIG. 8 and FIG. 9 are schematic diagrams of structures of possible communication apparatuses according to this application. These communication apparatuses may be configured to implement functions of the terminal device or the access network device in the foregoing method embodiments, and therefore can also achieve beneficial effects of the foregoing method embodiments.

In this application, the communication apparatus may be the terminal device shown in FIG. 1 or FIG. 2, may be the access network device shown in FIG. 1 or FIG. 2, or may be a module (such as a chip) used in the terminal device or the access network device.

As shown in FIG. 8, a communication apparatus 800 includes a processing module 801 and a transceiver module 802. The communication apparatus 800 is configured to implement functions of the terminal device or the access network device in the method embodiments shown in FIG. 5 to FIG. 7.

When the communication apparatus is configured to implement a function of the terminal device in the method embodiment shown in FIG. 5:

In a possible implementation, the transceiver module 802 is configured to receive first information, where the first information indicates a layer quantity of a PUSCH, and the layer quantity of the PUSCH is not less than 2; and the processing module 801 is configured to: determine a first MCS table based on the layer quantity of the PUSCH; and control, based on the first MCS table, the transceiver module 802 to send the PUSCH.

In a possible implementation, the first MCS table includes one or more of the following MCSs: an MCS whose modulation order is 6 and whose target coding rate×1024 is 455; and an MCS whose modulation order is 6 and whose target coding rate×1024 is 477.

In a possible implementation, a maximum modulation order in the first MCS table is 10, and the first MCS table does not include an MCS whose modulation order is 8 and whose target coding rate×1024 is 948.

In a possible implementation, the transceiver module 802 is further configured to receive a first MCS index and a first parameter; and the processing module 801 is further configured to: determine a modulation order of the PUSCH based on the first parameter; and determine, as a target coding rate of the PUSCH, a target coding rate corresponding to the first MCS index in the first MCS table.

In a possible implementation, the transceiver module 802 is further configured to receive a first MCS index and a scale factor, where the scale factor includes a first scale factor and/or a second scale factor; and the processing module 801 is further configured to: obtain a modulation order of the PUSCH based on the first scale factor and a modulation order corresponding to the first MCS index in the first MCS table; and/or obtain a target coding rate of the PUSCH based on the second scale factor and a target coding rate corresponding to the first MCS index in the first MCS table.

In a possible implementation, the transceiver module 802 is further configured to receive second information, where the second information indicates that a waveform of the PUSCH is a DFT-s-OFDM waveform.

When the communication apparatus is configured to implement a function of the access network device in the method embodiment shown in FIG. 5:

In a possible implementation, the transceiver module 802 is configured to send first information, where the first information indicates a layer quantity of a PUSCH, the layer quantity of the PUSCH is not less than 2, and the layer quantity of the PUSCH is associated with a first MCS table; the transceiver module 802 is further configured to receive the PUSCH; and the processing module 801 is configured to demodulate the PUSCH based on the first MCS table.

In a possible implementation, the first MCS table includes one or more of the following MCSs: an MCS whose modulation order is 6 and whose target coding rate×1024 is 455; and an MCS whose modulation order is 6 and whose target coding rate× 1024 is 477.

In a possible implementation, a maximum modulation order in the first MCS table is 10, and the first MCS table does not include an MCS whose modulation order is 8 and whose target coding rate×1024 is 948.

In a possible implementation, the transceiver module 802 is further configured to send a first MCS index and a first parameter, where the first parameter indicates a modulation order of the PUSCH, and the first MCS index corresponds to a target coding rate of the PUSCH in the first MCS table.

In a possible implementation, the transceiver module 802 is further configured to send a first MCS index and a scale factor, where the scale factor includes a first scale factor and/or a second scale factor; and the first scale factor and a modulation order corresponding to the first MCS index in the first MCS table are used to determine a modulation order of the PUSCH; and/or the second scale factor and a target coding rate corresponding to the first MCS index in the first MCS table are used to determine a target coding rate of the PUSCH.

In a possible implementation, the transceiver module 802 is further configured to send second information, where the second information indicates that a waveform of the PUSCH is a DFT-s-OFDM waveform.

When the communication apparatus is configured to implement a function of the terminal device in the method embodiment shown in FIG. 6 or FIG. 7:

In a possible implementation, the transceiver module 802 is configured to receive a cell identifier or an ARFCN; and the processing module 801 is configured to: determine a first MCS table based on the cell identifier or the ARFCN; and control, based on the first MCS table, the transceiver module 802 to send a PUSCH.

When the communication apparatus is configured to implement a function of the access network device in the method embodiment shown in FIG. 6 or FIG. 7:

In a possible implementation, the transceiver module 802 is configured to send a cell identifier or an ARFCN; and the processing module 801 is configured to: determine a first MCS table based on the cell identifier or the ARFCN; and control the transceiver module 802 to receive a PUSCH, and demodulate the PUSCH based on the first MCS table.

FIG. 9 shows an apparatus 900 according to an embodiment of this application. The apparatus shown in FIG. 9 may be an implementation of a hardware circuit of the apparatus shown in FIG. 8. The apparatus may be applicable to the foregoing flowchart, and performs the functions of the terminal device or the access network device in the foregoing method embodiments.

For ease of description, FIG. 9 shows only main components of the apparatus.

The apparatus 900 shown in FIG. 9 includes a communication interface 910, a processor 920, and a memory 930. The memory 930 is configured to store program instructions and/or data. The processor 920 may cooperate with the memory 930. The processor 920 may execute the program instructions stored in the memory 930. When the instructions or the program stored in the memory 930 is executed, the processor 920 is configured to perform an operation performed by the processing module 801 in the foregoing embodiments, and the communication interface 910 is configured to perform an operation performed by the transceiver module 802 in the foregoing embodiments.

The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. At least one of memories 930 may be included in the processor 920.

In this embodiment of this application, the communication interface may be a transceiver, a circuit, a bus, a module, or another type of communication interface. In this embodiment of this application, when the communication interface is the transceiver, the transceiver may include an independent receiver and an independent transmitter, or may be a transceiver integrated with a transceiver function or a communication interface.

The apparatus 900 may further include a communication line 940. The communication interface 910, the processor 920, and the memory 930 may be connected to each other through the communication line 940. The communication line 940 may be a peripheral component interconnect (peripheral component interconnect, PCI for short) bus, an extended industry standard architecture (extended industry standard architecture, EISA for short) bus, or the like. The communication line 940 may be classified into an address bus, a data bus, a control bus, and the like. For ease of representation, only one thick line is used in FIG. 9 for representation, but it does not indicate that there is only one bus or only one type of bus.

Based on the foregoing content and a same concept, an embodiment of this application provides a computer-readable storage medium. The computer-readable storage medium stores a computer program or instructions. When the computer program or the instructions are executed, a computer is enabled to perform the functions of the terminal device or the access network device in the foregoing method embodiments.

Based on the foregoing content and a same concept, an embodiment of this application provides a computer program product. When a computer reads and executes the computer program product, the computer performs the functions of the terminal device or the access network device in the foregoing method embodiments.

Based on the foregoing content and a same concept, an embodiment of this application provides a communication system. The communication system includes the terminal device or the access network device in the foregoing method embodiments. Optionally, the communication system may further include a core network device.

In this application, "at least one" means one or more, and "a plurality of" means two or more. "At least one of the following items (pieces)" or a similar expression thereof indicates any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural. "And/or" describes an association relationship between associated objects, and indicates that three relationships may exist, for example, A and/or B may indicate the following cases: A exists alone, both A and B exist, and B exists alone, where A and B may be singular or plural. In the text descriptions of this application, the character "/" generally indicates that the associated objects are in an "or" relationship. In a formula of this application, the character "/" indicates that the associated objects are in a "division" relationship.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on the functions and internal logic of the processes.

It is clear that a person skilled in the art can make various modifications and variations to this application without departing from the protection scope of this application. Therefore, this application is intended to cover these modifications and variations of this application provided that they fall within the scope of the claims of this application and their equivalent technologies.

## Claims

1. A communication method, comprising:
receiving first information, wherein the first information indicates a layer quantity of a physical uplink shared channel PUSCH, and the layer quantity of the PUSCH is not less than 2;
determining a first modulation and coding scheme MCS table based on the layer quantity of the PUSCH; and
sending the PUSCH based on the first MCS table.

2. The method according to claim 1, wherein the first MCS table comprises one or more of the following MCSs:
an MCS whose modulation order is 6 and whose target coding rate×1024 is 455; and
an MCS whose modulation order is 6 and whose target coding rate×1024 is 477.

3. The method according to claim 1 or 2, wherein a maximum modulation order in the first MCS table is 10, and the first MCS table does not comprise an MCS whose modulation order is 8 and whose target coding rate×1024 is 948.

4. The method according to any one of claims 1 to 3, further comprising:
receiving a first MCS index and a first parameter;
determining a modulation order of the PUSCH based on the first parameter; and
determining, as a target coding rate of the PUSCH, a target coding rate corresponding to the first MCS index in the first MCS table.

5. The method according to any one of claims 1 to 3, further comprising:
receiving a first MCS index and a scale factor, wherein the scale factor comprises a first scale factor and/or a second scale factor; and
obtaining a modulation order of the PUSCH based on the first scale factor and a modulation order corresponding to the first MCS index in the first MCS table; and/or
obtaining a target coding rate of the PUSCH based on the second scale factor and a target coding rate corresponding to the first MCS index in the first MCS table.

6. The method according to any one of claims 1 to 5, further comprising:
receiving second information, wherein the second information indicates that a waveform of the PUSCH is a discrete Fourier transform-spread orthogonal frequency division multiplexing DFT-s-OFDM waveform.

7. A communication method, comprising:
sending first information, wherein the first information indicates a layer quantity of a physical uplink shared channel PUSCH, the layer quantity of the PUSCH is not less than 2, and the layer quantity of the PUSCH is associated with a first modulation and coding scheme MCS table; and
receiving the PUSCH, and demodulating the PUSCH based on the first MCS table.

8. The method according to claim 7, wherein the first MCS table comprises one or more of the following MCSs:
an MCS whose modulation order is 6 and whose target coding rate×1024 is 455; and
an MCS whose modulation order is 6 and whose target coding rate×1024 is 477.

9. The method according to claim 7 or 8, wherein a maximum modulation order in the first MCS table is 10, and the first MCS table does not comprise an MCS whose modulation order is 8 and whose target coding rate×1024 is 948.

10. The method according to any one of claims 7 to 9, further comprising:
sending a first MCS index and a first parameter, wherein the first parameter indicates a modulation order of the PUSCH, and the first MCS index corresponds to a target coding rate of the PUSCH in the first MCS table.

11. The method according to any one of claims 7 to 9, further comprising:
sending a first MCS index and a scale factor, wherein the scale factor comprises a first scale factor and/or a second scale factor; and
the first scale factor and a modulation order corresponding to the first MCS index in the first MCS table are used to determine a modulation order of the PUSCH; and/or
the second scale factor and a target coding rate corresponding to the first MCS index in the first MCS table are used to determine a target coding rate of the PUSCH.

12. The method according to any one of claims 7 to 11, further comprising:
sending second information, wherein the second information indicates that a waveform of the PUSCH is a discrete Fourier transform-spread orthogonal frequency division multiplexing DFT-s-OFDM waveform.

13. A communication method, comprising:
receiving a cell identifier or an absolute radio frequency channel number ARFCN;
determining a first modulation and coding scheme MCS table based on the cell identifier or the ARFCN; and
sending a physical uplink shared channel PUSCH based on the first MCS table.

14. A communication method, comprising:
sending a cell identifier or an absolute radio frequency channel number ARFCN;
determining a first modulation and coding scheme MCS table based on the cell identifier or the ARFCN; and
receiving a physical uplink shared channel PUSCH, and demodulating the PUSCH based on the first MCS table.

15. A communication apparatus, comprising:
a transceiver module, configured to receive first information, wherein the first information indicates a layer quantity of a physical uplink shared channel PUSCH, and the layer quantity of the PUSCH is not less than 2; and
a processing module, configured to: determine a first modulation and coding scheme MCS table based on the layer quantity of the PUSCH; and control, based on the first MCS table, the transceiver module to send the PUSCH.

16. The apparatus according to claim 15, wherein the first MCS table comprises one or more of the following MCSs:
an MCS whose modulation order is 6 and whose target coding rate×1024 is 455; and
an MCS whose modulation order is 6 and whose target coding rate×1024 is 477.

17. The apparatus according to claim 15 or 16, wherein a maximum modulation order in the first MCS table is 10, and the first MCS table does not comprise an MCS whose modulation order is 8 and whose target coding rate×1024 is 948.

18. The apparatus according to any one of claims 15 to 17, wherein the transceiver module is further configured to receive a first MCS index and a first parameter; and
the processing module is further configured to: determine a modulation order of the PUSCH based on the first parameter; and determine, as a target coding rate of the PUSCH, a target coding rate corresponding to the first MCS index in the first MCS table.

19. The apparatus according to any one of claims 15 to 17, wherein the transceiver module is further configured to receive a first MCS index and a scale factor, wherein the scale factor comprises a first scale factor and/or a second scale factor; and
the processing module is further configured to: obtain a modulation order of the PUSCH based on the first scale factor and a modulation order corresponding to the first MCS index in the first MCS table; and/or obtain a target coding rate of the PUSCH based on the second scale factor and a target coding rate corresponding to the first MCS index in the first MCS table.

20. The apparatus according to any one of claims 15 to 19, wherein the transceiver module is further configured to receive second information, wherein the second information indicates that a waveform of the PUSCH is a discrete Fourier transform-spread orthogonal frequency division multiplexing DFT-s-OFDM waveform.

21. A communication apparatus, comprising:
a transceiver module, configured to send first information, wherein the first information indicates a layer quantity of a physical uplink shared channel PUSCH, the layer quantity of the PUSCH is not less than 2, and the layer quantity of the PUSCH is associated with a first modulation and coding scheme MCS table, wherein
the transceiver module is further configured to receive the PUSCH; and
a processing module, configured to demodulate the PUSCH based on the first MCS table.

22. The apparatus according to claim 21, wherein the first MCS table comprises one or more of the following MCSs:
an MCS whose modulation order is 6 and whose target coding rate×1024 is 455; and
an MCS whose modulation order is 6 and whose target coding rate×1024 is 477.

23. The apparatus according to claim 21 or 22, wherein a maximum modulation order in the first MCS table is 10, and the first MCS table does not comprise an MCS whose modulation order is 8 and whose target coding rate×1024 is 948.

24. The apparatus according to any one of claims 21 to 23, wherein the transceiver module is further configured to send a first MCS index and a first parameter, wherein the first parameter indicates a modulation order of the PUSCH, and the first MCS index corresponds to a target coding rate of the PUSCH in the first MCS table.

25. The apparatus according to any one of claims 21 to 23, wherein the transceiver module is further configured to send a first MCS index and a scale factor, wherein the scale factor comprises a first scale factor and/or a second scale factor; and
the first scale factor and a modulation order corresponding to the first MCS index in the first MCS table are used to determine a modulation order of the PUSCH; and/or
the second scale factor and a target coding rate corresponding to the first MCS index in the first MCS table are used to determine a target coding rate of the PUSCH.

26. The apparatus according to any one of claims 21 to 25, wherein the transceiver module is further configured to send second information, wherein the second information indicates that a waveform of the PUSCH is a discrete Fourier transform-spread orthogonal frequency division multiplexing DFT-s-OFDM waveform.

27. A communication apparatus, comprising:
a transceiver module, configured to receive a cell identifier or an absolute radio frequency channel number ARFCN; and
a processing module, configured to: determine a first modulation and coding scheme MCS table based on the cell identifier or the ARFCN; and control, based on the first MCS table, the transceiver module to send a physical uplink shared channel PUSCH.

28. A communication apparatus, comprising:
a transceiver module, configured to send a cell identifier or an absolute radio frequency channel number ARFCN; and
a processing module, configured to: determine a first modulation and coding scheme MCS table based on the cell identifier or the ARFCN; and control the transceiver module to receive a physical uplink shared channel PUSCH, and demodulate the PUSCH based on the first MCS table.

29. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement, by using a logic circuit or executing code instructions, the method according to any one of claims 1 to 6, any one of claims 7 to 12, claim 13, or claim 14.

30. A computer-readable storage medium, wherein the computer-readable storage medium stores a computer program or instructions, and when the computer program or the instructions are executed by a communication apparatus, the method according to any one of claims 1 to 6, any one of claims 7 to 12, claim 13, or claim 14 is implemented.

31. A computer program product, wherein the computer program product stores a computer program or instructions, and when the computer program or the instructions are executed by a communication apparatus, the method according to any one of claims 1 to 6, any one of claims 7 to 12, claim 13, or claim 14 is implemented.
